# FASCICULE DE BREVET EUROPEEN

(11) **EP 3 231 771 B1**
(45) Date de publication et mention de la délivrance du brevet: **12.06.2019**
(21) Numéro de dépôt: 17164456.0
(22) Date de dépôt: 03.04.2017
(51) Int. Cl.: C02F 1/28, B01J 20/28, B01F 3/22, B01F 7/16, B01F 15/00, B01F 15/04, C02F 1/52, C02F 9/00, B01J 20/34, B01J 20/20, B01F 7/00, B01F 5/10, B01D 15/02, B01D 21/32, B01D 21/24, B01F 3/00, B01F 3/12, C02F 1/00, C02F 101/30, C02F 101/32, C02F 1/56

(54) **PROCÉDÉ DE TRAITEMENT D'EAU PAR ADSORPTION SUR CHARBON ACTIF ET CLARIFICATION, ET INSTALLATION CORRESPONDANTE**
WASSERBEHANDLUNGSVERFAHREN DURCH ADSORPTION IN AKTIVKOHLE UND KLÄRANLAGE, UND ENTSPRECHENDE EINRICHTUNG
WATER TREATMENT PROCESS BY ADSORPTION IN ACTIVATED CARBON AND CLARIFICATION, AND CORRESPONDING INSTALLATION

(30) Priorité: 13.04.2016 FR 1653262
(43) Date de publication de la demande: 18.10.2017
(73) Titulaire: Veolia Water Solutions & Technologies Support, 94417 Saint-Maurice Cedex (FR)
(72) Inventeur: SAUVIGNET, Philippe, 35460 Saint-Etienne en Cogles (FR); GAID, Abdelkader, 75014 Paris (FR)
(74) Mandataire: Vidon Brevets & Stratégie

(56) Documents cités:
- WO-A2-2011/073335
- FR-A1- 2 973 794
- FR-A1- 3 022 537
- US-A1- 2010 044 285
- US-A1- 2011 006 002

## Description

### Domaine technique de l'invention

L'invention concerne le domaine du traitement des eaux.

Plus précisément, l'invention concerne les procédés de traitement des eaux mettant en oeuvre au moins une étape de traitement au cours de laquelle les eaux sont mises en contact avec un matériau granulaire adsorbant carboné inerte en vue d'en abattre la teneur en matières organiques et en polluants (pesticides, micro-polluants, perturbateurs endocriniens, résidus industriels, résidus de médicaments...) suivie d'une étape de clarification.

### Art antérieur

Les matériaux carbonés inertes en poudre ou en grains sont dotés d'une porosité intrinsèque très développée qui leur confère une surface spécifique élevée qui leur donne la propriété d'adsorber des quantités importantes de molécules organiques et de catalyser des réactions. En pratique, on peut évaluer la capacité d'adsorption d'un matériau adsorbant granulaire par la mesure de son indice d'iode. La capacité d'adsorption par mesure de l'indice d'iode indique la quantité d'iode, exprimée en milligramme, adsorbée par gramme de charbon actif en poudre. Cette mesure de l'indice d'iode peut notamment être effectuée selon la norme internationale ASTM n° D4607.

Les charbons actifs en poudre (CAP) utilisés dans le cadre des procédés de traitement des eaux présentent une granulométrie moyenne comprise entre 10 µm et 50 µm et une surface spécifique correspondant à un indice d'iode compris entre 800 et 1000 mg/g de CAP (indice mesuré selon la norme indiquée ci-dessus).

Dans le cadre de tels procédés, le CAP peut être mis en oeuvre selon différentes configurations.

Ainsi, le CAP peut être ajouté aux eaux à traiter dans un réacteur selon un temps de contact suffisant pour permettre l'adsorption de la matière organique qu'elles contiennent. Le CAP, chargé des matières qui s'y sont adsorbées, doit ensuite être séparé des eaux traitées par clarification. Cette étape de clarification est généralement mise en oeuvre par une décantation ou par séparation membranaire.

Des réactifs coagulants et/ou floculants sont classiquement ajoutés pour favoriser l'agrégation de la matière organique et du CAP sous forme de flocs et faciliter ainsi l'opération de clarification.

Compte tenu du coût élevé du CAP, le recyclage de ce matériau est prévu. A cette fin, les boues récupérées à l'issue de l'étape de clarification indiquée ci-dessus et contenant du matériau adsorbant, sont traitées de façon à en éliminer l'essentiel de la phase aqueuse. Cette étape est généralement mise en oeuvre par hydrocyclonage. On obtient à l'issue de cette étape, en sousverse de l'hydrocyclone, une phase contenant du matériau pulvérulent adsorbant qui peut être réintroduite dans le procédé de traitement d'eau. En pratique, cette phase contient une proportion élevée de matériau pulvérulent et encore de l'eau et se présente sous la forme d'une boue relativement fluide, l'essentiel de la phase aqueuse des boues provenant de l'étape de séparation indiquée ci-dessus ayant toutefois été éliminée en surverse de l'hydrocyclone.

Un exemple d'un tel procédé de l'art antérieur est décrit dans la demande de brevet française FR-A-2868064.

Selon un tel art antérieur, le matériau pulvérulent recyclé *in situ* n'est pas débarrassé par l'étape d'hydrocyclonage de toute la matière organique adsorbée sur celui-ci mais seulement d'une petite partie de celle-ci. Bien que recyclé *in situ* le matériau adsorbant voit progressivement son pouvoir adsorbant diminuer. Il est ainsi nécessaire de remplacer régulièrement une partie du CAP mis en oeuvre au sein du réacteur par du CAP neuf. Des quantités de CAP neuf doivent donc parallèlement être injectées régulièrement dans le réacteur pour compenser la perte d'adsorption du CAP usité.

Bien que ce type de procédé autorise le remplacement d'une partie du CAP usité par du CAP neuf sans devoir mettre à l'arrêt les installations qui le mettent en oeuvre, il présente par ailleurs d'autres inconvénients.

Ainsi, le CAP issu des purges du système ne peut pas être régénéré en ce sens qu'on ne connaît pas de traitement efficace économiquement permettant de redonner au CAP son pouvoir adsorbant d'origine ou un pouvoir adsorbant proche de celui-ci. Il en résulte la production de boues de CAP qui doivent être évacuées hors de l'usine. Le traitement de ces boues n'est pas sans inconvénient. Notamment, les boues doivent être déshydratées avant d'être transportées, ce qui augmente les coûts associés à leur mise en décharge ou à leur incinération où à leur épandage agricole.

Le CAP étant un matériau cher, son utilisation dans le cadre du traitement de l'eau se heurte donc à des impératifs économiques, les techniques le mettant en oeuvre présentant l'inconvénient d'impliquer, de ce fait, des coûts de fonctionnement élevés.

De plus, le traitement de l'eau par le CAP implique en pratique l'addition de quantités importantes de coagulants, tel que du FeCl₃, et/ou de floculants, tels que des polymères, permettant la formation de flocs suffisamment denses. Ceci, afin de favoriser la décantation et permettre aussi d'éviter les fuites de CAP qui dégraderaient les traitements d'affinage prévus en aval, tels qu'une filtration. L'addition d'un micro-lest, tel que du micro-sable pour accélérer la décantation est également courante. L'utilisation de polymères, peut conduire à une saturation accélérée du CAP ce qui oblige l'utilisateur à le renouveler plus fréquemment. Surtout, l'utilisation de ces produits conduit à l'obtention de volumes de boues augmentés devant être traités dans des filières parallèles. En pratique, ces boues doivent être épaissies, déshydratées et évacuées hors du site de production. Les coûts d'exploitation de tels procédés s'en trouvent donc également augmentés. Ces boues de CAP ne peuvent en tout état de cause pas être traitées de façon à permettre l'obtention de CAP régénéré.

US 2011/0006002 divulgue un procédé de traitement d'eau par mise en contacte avec charbon actif dans une cuve avec agitation et séparation dudit charbon actif.

### Objectifs de l'invention

L'objectif de la présente invention est de proposer un procédé de traitement d'eau en vue d'en éliminer les matières organiques et les polluants dans lequel l'eau est mise en contact dans une cuve de contact avec un matériau adsorbant puis clarifiée en évitant les problèmes de l'art antérieur résultant de la présence de matériau adsorbant dans les eaux lors de leur clarification.

Un objectif de la présente invention est de proposer un tel procédé qui conduise à minimiser les quantités de boues résultant de la clarification.

Un autre objectif de la présente invention est de décrire un tel procédé qui conduise à minimiser les quantités de polymère lorsque la clarification met en oeuvre un tel matériau.

Encore un objectif de la présente invention et de divulguer un tel procédé selon lequel le matériau adsorbant peut être renouvelé sans avoir à interrompre le traitement.

Un objectif de la présente invention est aussi de divulguer un tel procédé qui permette de maintenir un niveau de traitement de l'eau essentiellement constant dans le temps.

Egalement un objectif de la présente invention est de proposer un tel procédé qui, dans au moins un de ses modes de réalisation, conduit à un matériau adsorbant usité qui peut être directement régénéré, c'est-à-dire dont la capacité d'adsorption vis-à-vis de la matière organique peut être facilement restaurée.

Ainsi, un objectif de l'invention est de décrire un tel procédé qui, dans au moins un de ses modes de réalisation, permet de restaurer 50 % de la capacité d'adsorption du matériau adsorbant, c'est-à-dire permettant d'obtenir un matériau adsorbant au moins partiellement régénéré dont la capacité d'adsorption correspond à au moins 50 % de celle du même matériau adsorbant neuf.

Un autre objectif de la présente invention est de décrire un tel procédé induisant des coûts de traitement plus faibles que ceux des procédés de l'art antérieur, à niveaux de traitement sensiblement égaux.

Un autre objectif de l'invention est de proposer une installation pour la mise en oeuvre d'un tel procédé.

Encore un objectif de l'invention est de divulguer une telle installation qui puisse résulter de la réhabilitation de stations anciennes existantes.

### Exposé de l'invention

Ces différents objectifs sont atteints grâce à l'invention qui concerne un procédé de traitement d'eaux en vue d'en abattre la teneur en matières organiques et en polluants, ledit procédé comprenant :
une étape de mise en contact d'eaux à traiter avec un matériau adsorbant granulaire dans une cuve de contact pourvue de moyens d'agitation;
suivie d'une étape de clarification des eaux provenant de ladite cuve conduisant à l'obtention d'une eau clarifiée et de boues;
caractérisé en ce que
ledit matériau adsorbant granulaire est constitué d'agglomérats de particules de charbon actif, lesdits agglomérats présentant une taille moyenne comprise entre 200 µm et 600 µm et une surface spécifique comprise entre 800 et 1000 m²/g, ledit matériau adsorbant granulaire étant régénérable par voie thermique ;
lesdites eaux sont filtrées en sortant de ladite cuve sur un tamis installé dans la partie supérieure de ladite cuve, avant de subir la clarification, afin de retenir ledit matériau granulaire adsorbant au sein de ladite cuve tout en ne retenant pas la matière organique non adsorbée sur ledit matériau adsorbant,
et en ce que
le contenu de ladite cuve de contact n'est agité que partiellement de façon à créer un gradient de concentration dudit matériau adsorbant au sein de celle-ci, le fond de ladite cuve de contact constituant une zone non agitée ;
du matériau granulaire adsorbant usagé étant purgé de façon continue ou intermittente de ladite zone non agitée de ladite cuve de contact en vue d'être régénéré extemporanément par voie thermique, et remplacé par du matériau granulaire adsorbant neuf.

Ainsi, selon l'invention, aucun recyclage *in situ* dudit matériau adsorbant granulaire n'est nécessaire.

Le matériau adsorbant utilisé dans le cadre du procédé selon l'invention est un matériau disponible dans le commerce qui n'est donc pas un CAP au sens où on l'entend dans le domaine du traitement de l'eau. Il présente en effet une surface spécifique plus élevée que le CAP. Il ne constitue également pas un charbon actif en grains (CAG) au sens où on l'entend dans le domaine du traitement de l'eau. Il présente en effet une granulométrie plus faible.

Un tel matériau adsorbant spécifique présente, entre autres avantages, celui de pouvoir être régénéré par voie thermique à la différence des CAP classiquement utilisés dans le domaine du traitement de l'eau qui ne peuvent l'être.

Selon l'invention, ce matériau est retenu dans la cuve de contact grâce à des moyens appropriés, ce qui évite sa propagation lors de l'étape de clarification et permet d'éviter tout risque de dissémination de ce matériau dans les eaux clarifiées. Ces moyens permettent de retenir le matériau adsorbant dans la cuve de contact tout en laissant passer les eaux et les matières organiques et polluants non adsorbés. Ainsi, tous les problèmes de l'art antérieur résultant de la présence de matériau adsorbant dans les organes de clarification, quels qu'ils soient, sont évités.

Notamment, les quantités de boues issues de la clarification sont plus faibles que dans l'art antérieur. Ces boues ne contenant pas de matériau adsorbant, il est de plus inutile de les traiter pour en séparer celui-ci. Les coûts de mise en oeuvre du procédé selon l'invention sont donc réduits par rapport aux coûts suscités par les procédés de l'art antérieur qui impliquent la nécessité de traiter les boues issues de la clarification en vue d'en récupérer le matériau adsorbant qu'elles contiennent.

Selon l'invention, le contenu de la cuve de contact n'est agité que partiellement, une zone non agitée de la cuve étant ménagée dans la partie inférieure de celle-ci. Ainsi, un gradient de concentration de matériau adsorbant est créé au sein de la cuve de contact. Le matériau granulaire adsorbant usité, alourdi des matières qui s'y sont adsorbées, voit sa densité augmenter. Il s'accumule ainsi dans la partie inférieure de la cuve de contact. Ce matériau granulaire usité peut être purgé depuis cette partie inférieure et remplacé par du matériau neuf, sans avoir à interrompre le procédé.

Le matériau adsorbant purgé peut être égoutté et stocké dans des futs qui sont, une fois pleins, acheminés vers un site externe en vue de régénérer le matériau adsorbant qu'ils contiennent par voie thermique. Le matériau adsorbant spécifique mis en oeuvre dans le cadre de la présente invention peut en effet être régénéré par voie thermique en l'absence de tout traitement, à part un simple égouttage préalable.

La durée de la mise en contact du matériau adsorbant avec les eaux dans la cuve de contact sera choisie par l'homme de l'art de façon à optimiser l'adsorption de la matière organique et des polluants contenus dans celle-ci. En pratique, ce temps de contact sera préférentiellement compris entre 5 min et 20 min.

La concentration de matériau adsorbant dans la cuve de contact sera choisie par l'homme de l'art en fonction de la charge en matières organiques et en polluants des eaux à traiter. En pratique, de façon préférentielle, le matériau granulaire adsorbant usagé est purgé et remplacé par du matériau granulaire adsorbant neuf de façon à maintenir une concentration moyenne dudit matériau adsorbant dans ladite cuve de contact lors de ladite étape de mise en contact. Cette concentration moyenne variera en fonction des eaux à traiter.

Préférentiellement, le procédé comprend une étape préliminaire consistant à pré-filtrer les eaux à traiter avant leur entrée dans ledit réacteur sur un pré-filtre présentant un seuil de coupure compris entre 1 mm et 5 mm. Une telle pré-filtration a pour objet de débarrasser les eaux à traiter des solides qui pourraient être piégés lors des étapes ultérieures du procédé.

Selon une variante, le procédé comprend des étapes périodiques de nettoyage dudit tamis par un procédé de nettoyage choisi dans le groupe constitué par un procédé de rétro-lavage et un procédé de nettoyage par insufflation d'air. Ainsi, le colmatage du filtre est évité.

Le procédé selon l'invention pourra être mis en oeuvre avec de nombreuses techniques de clarification. Selon une variante intéressante, cette clarification comprend une étape de coagulation de ladite eau à traiter produisant des eaux coagulées, une étape de floculation de ladite eau coagulée produisant des eaux floculées, une étape de décantation de ladite eau floculée produisant des eaux clarifiées et des boues, lesdites étapes de coagulation, de floculation et de décantation étant grâce à l'invention menées en absence de matériau granulaire adsorbant.

Selon une telle variante, le procédé permet d'économiser les quantités de floculant (polymère) devant être mises en oeuvre par rapport à l'art antérieur dans lequel les eaux à clarifier contiennent du matériau adsorbant. En effet, ce matériau s'agrège avec le polymère. En son absence il y a donc besoin de moins de polymère.

Egalement selon une variante, ladite étape de clarification par coagulation-floculation-décantation comprend aussi une étape d'injection d'un ballast pour lester les flocs formés, une étape de traitement desdites boues pour en extraire l'essentiel du ballast qu'elles contiennent et une étape consistant à recycler celui-ci dans ladite étape de clarification, lesdites boues ne contenant pas de matériau granulaire adsorbant.

L'invention concerne également une installation pour la mise en oeuvre du procédé selon l'invention caractérisée en ce qu'elle comprend:
une cuve de contact pourvue de moyens d'amenée d'eaux, de moyens d'évacuation d'eaux par surverse, de moyens d'agitation, et de matériau granulaire adsorbant, ladite cuve de contact accueillant un mélange d'eaux à traiter et de matériau granulaire adsorbant;
des moyens de clarification reliés auxdits moyens d'évacuation par surverse ;
caractérisée en ce que ledit matériau adsorbant est constitué d'agglomérats de particules de charbon actif, lesdits agglomérats présentant une taille moyenne comprise entre 200 µm et 600 µm et une surface spécifique comprise entre 800 et 1000 m²/g;
en ce qu'elle inclut un tamis installé dans la partie supérieure de ladite cuve de contact, ledit tamis comprenant une couche de matériau poreux présentant une épaisseur comprise entre 1 et 5 mm, ledit matériau présentant un seuil de coupure compris entre 100 µm et 200 µm ;
en ce que ladite cuve présente une partie inférieure en forme de trémie, l'extrémité de ladite trémie étant pourvue de moyens de purge ;
en ce que lesdits moyens d'agitation de ladite cuve de contact sont conçus de façon à pouvoir agiter le contenu de partie supérieure de ladite cuve de contact sans en agiter le contenu de la partie inférieure en forme de trémie.

Dans une telle installation, les caractéristiques physiques de la couche de matériau poreux utilisée pour former le tamis permettent à celui-ci de remplir sa fonction qui consiste à retenir le matériau granulaire adsorbant au sein de la cuve de contact tout en ne retenant pas la matière organique non adsorbée sur celle-ci. Ce tamis laisse donc passer la turbidité de l'eau tout en empêchant le matériau granulaire de gagner les moyens de clarification.

La faible épaisseur de cette couche, à savoir entre 1 mm et 5 mm, permet notamment d'éviter une filtration dans sa masse.

La forme de trémie de la partie inférieure de la cuve de contact permet de favoriser la migration du matériau granulaire usité dans cette partie et son extraction par les moyens de purge prévus à son extrémité.

Préférentiellement, le matériau poreux utilisé pour former le tamis est un polyéthylène à haute densité (PEHD). Un tel matériau présente l'avantage d'être agréé pour les applications alimentaires et aussi celui de très bien supporter les réactifs chimiques au cas exceptionnel où ceux-ci devraient être utilisés pour nettoyer le tamis.

Selon une variante intéressante, la couche de matériau poreux qui forme le tamis est organisée en une structure en forme de tube ou de boite, la filtration s'exerçant de l'extérieur vers l'intérieur du tube ou de la boite, lesdits moyens d'évacuation de ladite cuve de contact étant reliés à l'intérieur du tube ou de la boite. De tels tubes ou boites présentent l'avantage d'être disponibles dans le commerce et de pouvoir être facilement remplacés.

Egalement, selon une variante de l'invention lesdits moyens d'agitation de ladite cuve de contact incluent un rotor à pales montés mobiles verticalement dans celle-ci et des moyens permettant de faire varier la vitesse de rotation dudit rotor et des moyens permettant de faire varier la position verticale du rotor dans ladite cuve de contact. De tels moyens constituent des moyens préférentiels pour que, selon le procédé de l'invention, le contenu de ladite cuve de contact ne soit agité que partiellement de façon à créer un gradient de concentration dudit matériau adsorbant au sein de celle-ci, le fond de ladite cuve de contact constituant une zone non agitée.

Bien que l'installation selon la présente invention pourra inclure différents moyens de clarification, ladite installation comprend préférentiellement des moyens d'injection de coagulant dans une zone de coagulation et des moyens d'injection de floculant dans une zone de floculation pour une clarification par coagulation-floculation-décantation.

Préférentiellement, elle comprend aussi des moyens d'injection d'un ballast dans ladite zone de floculation et avantageusement des moyens d'extraction des boues provenant desdits moyens de clarification reliés à des moyens de traitement desdites boues permettant d'en extraire l'essentiel du ballast qu'elles contiennent et des moyens de distribution du ballast extrait dans ladite zone de floculation.

### Liste des figures

L'invention, ainsi que les différents avantages qu'elle présente, seront mieux compris grâce à la description qui va suivre d'un mode non limitatif de réalisation de celle-ci, en référence aux dessins dans lesquelles :
- la figure 1 représente une vue schématique d'une installation selon l'invention ;
- la figure 2 représente un graphe indiquant la turbidité NTU d'une eau avant et après traitement selon le procédé de l'invention dans l'installation représentée à la figure 1 ;
- la figure 3 représente un graphe indiquant l'absorbance UV à 254 nm d'une eau avant et après traitement selon le procédé de l'invention dans l'installation représentée à la figure 1.

### Mode de réalisation d'une installation selon l'invention

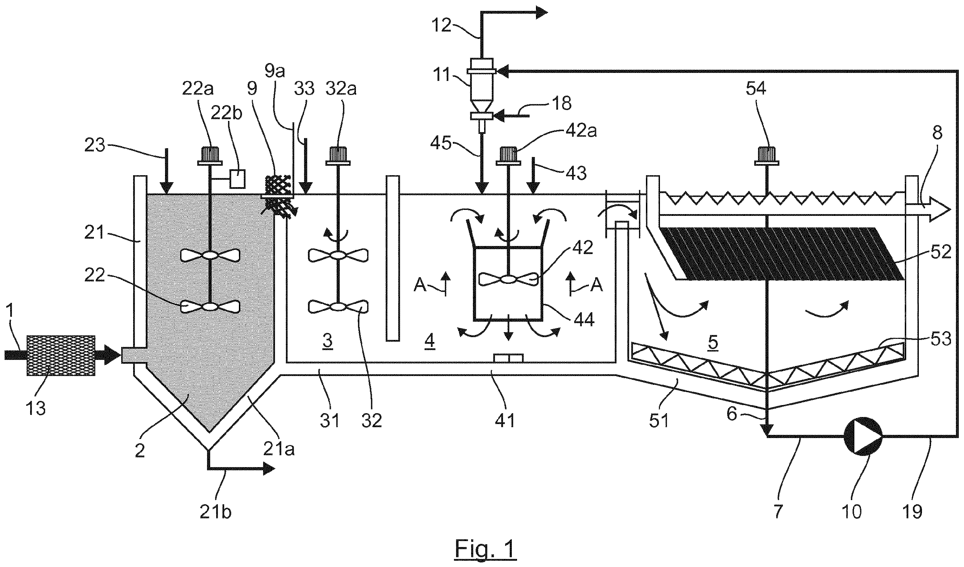

On présente, en relation avec la figure 1, un mode de réalisation d'une installation selon l'invention.

Une telle installation de traitement d'eau comprend une canalisation d'amenée d'eau brute à traiter 1 qui arrive dans une zone 2 de mise en contact de cette eau avec un matériau adsorbant.

Sur la canalisation d'amenée d'eau 1, un pré-filtre 13 constitué de mailles métalliques est prévu. Ce pré-filtre présente, dans le présent mode de réalisation, un seuil de coupure de 1 mm.

Le matériau granulaire adsorbant est constitué d'agglomérats de particules de charbon actif et est commercialisé par la société CHEMVIRON sous la dénomination Microsorb (marque déposée) 400 R. Ces agglomérats présentent une taille moyenne comprise entre 200 µm et 600 µm, et un indice d'iode supérieur à 800 mg/g. Leur surface spécifique (N₂, méthode BET) est de 900 m²/g. Ce matériau adsorbant granulaire est régénérable par voie thermique. Ce matériau peut être amené dans la cuve de contact 21 par des moyens tels qu'un distributeur 23.

La zone de pré-contact 2 est délimitée par les parois d'une cuve de contact 21 présentant une partie inférieure en forme de trémie 21a dont l'extrémité inférieure est équipée de moyens de purge 21b. Cette cuve de contact 21 loge des moyens d'agitation comprenant un agitateur à pales 22 dont la vitesse de rotation peut être adaptée grâce à un moteur 22a. Des moyens 22b permettent également de régler la hauteur de l'agitateur dans la cuve de contact 21.

La cuve de contact 21 communique, dans une partie haute, avec une zone de coagulation 3. A ce niveau, est prévu un tamis 9 constitué par une structure en tube réalisée en une couche d'épaisseur égale à 1 mm d'un matériau poreux en polyéthylène haute densité (PEHD) présentant une porosité de 150 µm. Ce tamis permet de filtrer l'eau transitant de la zone de contact 2 vers la zone de coagulation 3. Il est équipé d'une rampe d'amenée d'air 9a traversant la structure tubulaire permettant, quand nécessaire, d'envoyer de l'air sur le matériau poreux afin de le nettoyer efficacement.

La zone de coagulation 3 est délimitée par les contours d'une cuve de coagulation 31 qui loge un agitateur 32 commandé par un moteur 32a. Des moyens d'injection, comme par exemple un injecteur 33, permettent l'injection d'un réactif coagulant, en l'occurrence du chlorure ferrique, dans la zone de coagulation 3, dans le présent mode de réalisation à raison de 20 ppm. Cette zone de coagulation 3 communique dans une partie inférieure avec une zone de floculation lestée 4.

Cette zone de floculation lestée 4 est délimitée par les contours d'une cuve de floculation 41 qui loge un agitateur 42 commandé par un moteur 42a. Des moyens d'injection, comme par exemple un injecteur 43, permettent l'injection d'au moins un réactif floculant, en l'occurrence un polymère anionique, dans la zone de floculation lestée, dans le présent mode de réalisation à raison de 0,2 ppm. Des moyens d'injection 45 permettent également d'introduire dans la cuve de floculation 41 du ballast constitué par un matériau granulaire insoluble plus dense que l'eau, en l'occurrence du micro-sable, dans le présent mode de réalisation à raison de 4,9 g/m³. Cette zone de floculation lestée 4 loge également un élément guide flux qui comprend un élément essentiellement tubulaire 44 à l'intérieur duquel est mis en rotation l'agitateur 42. La zone de floculation lestée 4 constitue de ce fait une zone de maturation. Elle communique dans une partie haute avec une zone de décantation 5.

La zone de décantation 5 est délimitée par un décanteur 51 pourvu de lamelles inclinées 52 facilitant et accélérant la décantation et d'un racleur 53 actionné par un moteur 54. Ce décanteur 51 présente une sousverse 6 qui est reliée à une canalisation d'extraction 7 de boues contenant du ballast. Il présente également une surverse 8 pour l'évacuation d'une eau traitée.

Une canalisation 19 et des moyens de soutirage, incluant une pompe 10, permettent l'acheminement de ce mélange à l'entrée d'un hydrocyclone 11.

L'hydrocyclone 11 présente une sousverse qui permet l'acheminement d'un mélange de ballast et d'une faible quantité de boues vers les moyens d'injection 45. Cette sousverse est reliée à des moyens d'injection d'eau de service 18. Ceci permet l'injection d'un mélange de ballast et de boues diluées dans la zone de floculation lestée 4. Il présente également une surverse qui est reliée à une canalisation 12 qui permet l'évacuation des boues débarrassée de leur ballast en vue d'un traitement visant à les déshydrater et à les hygiéniser.

Conformément à l'invention, l'installation ne présente aucun moyen de recyclage *in situ* dudit matériau adsorbant granulaire, celui-ci étant cantonné dans la cuve de contact 21.

### Exemple d'un procédé de traitement d'eau selon l'invention

Un procédé de traitement d'eau selon l'invention va maintenant être décrit en relation avec l'installation représentée à la figure 1.

Un tel procédé consiste à acheminer par la canalisation 1 de l'eau à traiter dans la cuve de contact 21, après l'avoir filtrée grâce au pré-filtre 13, dans laquelle elle est mise en contact avec le matériau granulaire adsorbant indiqué ci-dessus, à raison de 75 mg de matériau par litre d'eau. Cette concentration variera en fonction notamment de la charge des eaux à traiter en matières organiques et en polluants. Une telle concentration permet d'adsorber une partie de la matière organique et des polluants contenus dans les eaux.

Selon l'invention, le contenu de la cuve de contact 21 n'est agité que dans sa partie médiane et supérieure par l'agitateur 22. A cet effet, le moteur 22a et les moyens 22 b de réglage de la hauteur de l'agitateur dans la cuve sont actionnés de façon à créer un gradient de concentration dudit matériau adsorbant au sein de la cuve de contact 21, le fond de ladite cuve constituant une zone non agitée vers laquelle migre, du fait de sa densité croissante, le matériau granulaire adsorbant au fur et à mesure qu'il se charge en matières organiques et en polluants.

Après un temps de contact suffisant, le mélange d'eau et de matériau granulaire adsorbant est introduit dans la cuve de coagulation 31 en transitant par le tamis 9 afin de retenir le matériau granulaire adsorbant dans la cuve de contact 21 tout en laissant passer sa turbidité.

Dans la cuve de coagulation 31, le réactif coagulant est mélangé à l'eau. Après un temps de contact suffisant, le mélange d'eau et de réactif coagulant transite dans la zone de floculation lestée 4 délimitée par la cuve de floculation 41. Ce mélange y rencontre le réactif floculant introduit par la mise en oeuvre des moyens d'injection 43, et du micro-sable introduit grâce aux moyens d'injection 45.

La mise en oeuvre du guide flux 44 permet la création de phénomènes dynamiques qui engendrent des mouvements d'eau représentés par les flèches A. Après maturation, le mélange provenant de la zone de floculation lestée 4 transite dans la zone de décantation 5 délimitée par le décanteur 51. Les boues contenant du ballast sont extraites en sousverse 6 du décanteur 51 au moyen de la canalisation 7. L'eau traitée est recueillie en surverse 8 de celui-ci.

Les boues sont recirculées vers l'entrée de l'hydrocyclone 11 au moyen de la canalisation 19 et de la pompe 10.

Le ballast est séparé à l'intérieur de l'hydrocyclone 11 du reste des boues. Il en est extrait en sousverse et déversé dans la zone de floculation lestée 4. Le reste des boues extrait en surverse de l'hydrocyclone 11 est évacué.

Selon l'invention, du matériau granulaire adsorbant usité est soutiré de la cuve de contact 21 par les moyens de purge 21 b. Ce matériau usité est égoutté et conditionné en fût qui une fois rempli peut être acheminé vers une unité de régénération thermique du matériau adsorbant. Un taux de renouvellement de 20 g/m³ est ainsi mis en oeuvre.

Grâce au tamis 9, le matériau adsorbant granulaire est retenu dans la cuve de contact 21 et ne migre ni dans les équipements situés en aval de celle-ci ni, a fortiori, dans les eaux traitées. Le fonctionnement de ces équipements est donc facilité et le risque de retrouver du matériau granulaire dans les eaux traitées quasi inexistant. Par ailleurs, la quantité de boues produites à la sortie du décanteur est diminuée et l'action du floculant optimisée. L'énergie nécessaire au recyclage et au traitement de ces boues provenant du décanteur est également diminuée. Les quantités de boues extraites de l'hydrocyclone et devant être traitées sont également moindres.

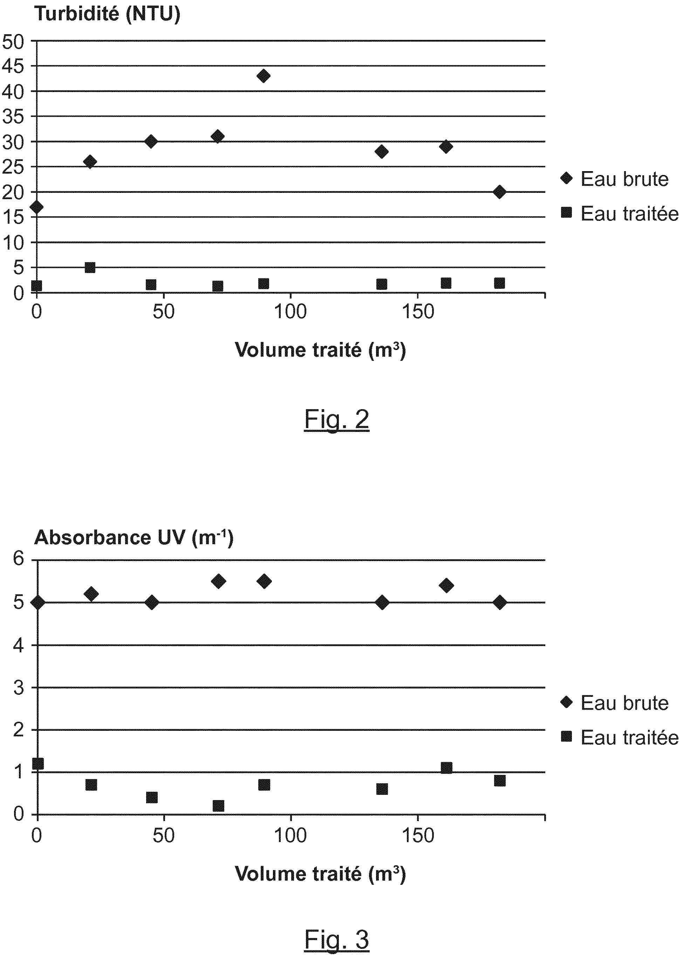

L'invention permet d'abattre de façon efficace et stable la turbidité NTU des eaux traitées comme on peut le voir sur la figure 2. En pratique, lors des tests dont les résultats sont restitués sur cette figure, on a observé un abattement moyen de 92 % de la turbidité.

L'invention permet aussi d'abattre de façon efficace de la matière organique contenue dans les eaux traitées comme on peut le voir sur la figure 3. En pratique, lors des tests dont les résultats sont restitués sur cette figure, on a observé un abattement moyen de 86 % de l'absorbance UV à 254 nm de l'eau traitée, représentative de sa teneur en matières organiques.

## Revendications

1. Procédé de traitement d'eaux en vue d'en abattre la teneur en matières organiques et en polluants, ledit procédé comprenant :
une étape de mise en contact d'eaux à traiter avec un matériau adsorbant granulaire dans une cuve de contact pourvue de moyens d'agitation;
suivie d'une étape de clarification des eaux provenant de ladite cuve conduisant à l'obtention d'une eau clarifiée et de boues;
**caractérisé en ce que**
ledit matériau adsorbant granulaire est constitué d'agglomérats de particules de charbon actif, lesdits agglomérats présentant une taille moyenne comprise entre 200 µm et 600 µm et une surface spécifique comprise entre 800 et 1000 m²/g, ledit matériau adsorbant granulaire étant régénérable par voie thermique ;
lesdites eaux sont filtrées en sortant de ladite cuve sur un tamis installé dans la partie supérieure de ladite cuve, avant de subir la clarification, afin de retenir ledit matériau granulaire adsorbant au sein de ladite cuve tout en ne retenant pas la matière organique non adsorbée sur ledit matériau adsorbant,
et **en ce que**
le contenu de ladite cuve de contact n'est agité que partiellement de façon à créer un gradient de concentration dudit matériau adsorbant au sein de celle-ci, le fond de ladite cuve de contact constituant une zone non agitée ;
du matériau granulaire adsorbant usagé étant purgé de façon continue ou intermittente de ladite zone non agitée de ladite cuve de contact en vue d'être régénéré extemporanément par voie thermique, et remplacé par du matériau granulaire adsorbant neuf.

2. Procédé selon la revendication 1 **caractérisé en ce que** le temps de contact du matériau adsorbant avec les eaux dans ladite cuve de contact est compris entre 5 min et 20 min.

3. Procédé selon la revendication 1 ou 2 caractérisé que le matériau granulaire adsorbant usagé est purgé et remplacé par du matériau granulaire adsorbant neuf de façon à maintenir une concentration moyenne dudit matériau adsorbant dans ladite cuve de contact.

4. Procédé selon l'une quelconque des revendications 1 à 3 **caractérisé en ce qu'**il comprend une étape préliminaire consistant à pré-filtrer les eaux à traiter avant leur entrée dans ledit réacteur sur un pré-filtre présentant un seuil de coupure compris entre 1 et 5 mm.

5. Procédé selon l'une quelconque des revendications 1 à 4 **caractérisé en ce qu'**il comprend des étapes périodiques de nettoyage dudit tamis par un procédé de nettoyage choisi dans le groupe constitué par un procédé de rétro-lavage et un procédé de nettoyage par insufflation d'air.

6. Procédé selon l'une quelconque des revendications 1 à 5 **caractérisé en ce que** ladite étape de clarification comprend une étape de coagulation de ladite eau à traiter produisant des eaux coagulées, une étape de floculation de ladite eau coagulée produisant des eaux floculées, une étape de décantation de ladite eau floculée produisant des eaux clarifiées et des boues; lesdites étapes de coagulation, de floculation et de décantation étant menées en absence de matériau granulaire adsorbant.

7. Procédé selon la revendication 6 **caractérisé en ce que** ladite étape de clarification comprend une étape d'injection d'un ballast, une étape de traitement desdites boues pour en extraire l'essentiel du ballast qu'elles contiennent et une étape consistant à recycler celui-ci dans ladite étape de clarification, lesdites boues ne contenant pas de matériau granulaire adsorbant.

8. Installation pour la mise en oeuvre du procédé selon l'une quelconque des revendications 1 à 7 **caractérisée en ce qu'**elle comprend :
une cuve de contact (21) pourvue de moyens d'amenée (1) d'eaux, de moyens d'évacuation d'eaux par surverse, de moyens d'agitation (22) et de matériau granulaire adsorbant, ladite cuve de contact (21) accueillant un mélange d'eaux à traiter et de matériau granulaire adsorbant;
des moyens de clarification reliés auxdits moyens d'évacuation par surverse ;
**caractérisée en ce que** ledit matériau adsorbant est constitué d'agglomérats de particules de charbon actif, lesdits agglomérats présentant une taille moyenne comprise entre 200 µm et 600 µm et une surface spécifique comprise entre 800 et 1000 m²/g;
**en ce qu'**elle inclut un tamis (9) installé dans la partie supérieure de ladite cuve, ledit tamis comprenant une couche de matériau poreux présentant une épaisseur comprise entre 1 et 5 mm, ledit matériau présentant un seuil de coupure compris entre 100 µm et 200 µm;
**en ce que** ladite cuve de contact (21) présente une partie inférieure (21a) en forme de trémie, l'extrémité de ladite trémie étant pourvue de moyens de purge (21b) ;
**en ce que** lesdits moyens d'agitation (22) de ladite cuve de contact (21) sont conçus de façon à pouvoir agiter le contenu de la partie supérieure de ladite cuve de contact (21) sans en agiter le contenu de la partie inférieure (21a) en forme de trémie.

9. Installation selon la revendication 8 **caractérisée en ce que** ledit matériau poreux est un PEHD.

10. Installation selon la revendication 8 ou 9 **caractérisée en ce que** la couche de matériau poreux formant ledit tamis (9) est organisée en une structure en forme de tube ou de boite, la filtration s'exerçant de l'extérieur vers l'intérieur du tube ou de la boite, lesdits moyens d'évacuation de ladite cuve étant reliés à l'intérieur du tube ou de la boite.

11. Installation selon l'une des revendications 8 à 10 **caractérisée en ce que** lesdits moyens d'agitation (22) de ladite cuve de contact (21) incluent un rotor à pales montés mobiles verticalement dans celle-ci, des moyens (22a) permettant de faire varier la vitesse de rotation dudit rotor et des moyens (22b) permettant de faire varier la position verticale du rotor dans ladite cuve.

12. Installation selon l'une des revendications 8 à 11 **caractérisée en ce qu'**elle comprend un filtre (13) pour filtrer les eaux à traiter, prévu en amont de ladite cuve de contact (21) et présentant un seuil de coupure compris entre 1 mm et 5 mm.

13. Installation selon l'une des revendications 8 à 12 **caractérisée** en que ladite installation comprend des moyens d'injection de coagulant (33) dans une zone de coagulation (3) et des moyens d'injection de floculant (43) dans une zone de floculation (4).

14. Installation selon la revendication 13 **caractérisée en ce qu'**elle comprend des moyens d'injection de ballast (45) dans ladite zone de floculation (4).

15. Installation selon la revendication 14 **caractérisée en ce qu'**elle inclut des moyens d'extraction (7) de boues provenant desdits moyens de clarification reliés à des moyens de traitement desdites boues permettant d'en extraire l'essentiel du ballast qu'elles contiennent et des moyens de distribution du ballast extrait dans ladite zone de floculation (4).

## Patentansprüche

1. Verfahren für die Behandlung von Wasser zwecks Senkung des Gehalts an organischen Materialien und Schadstoffen darin, wobei das Verfahren umfasst:
einen Schritt des Inkontaktversetzens von zu behandelnden Wassern mit einem adsorbierenden Granulatmaterial in einem mit Rührmitteln versehenen Kontaktbehälter;
gefolgt von einem Schritt des Klärens der aus dem Behälter kommenden Wasser, der zum Erhalt eines geklärten Wassers und von Schlämmen führt;
**dadurch gekennzeichnet, dass**
das adsorbierende Granulatmaterial aus Agglomeraten von Aktivkohlepartikeln besteht, wobei die Agglomerate eine durchschnittliche Größe aufweisen, die zwischen 200 µm und 600 µm liegt, und eine spezifische Oberfläche, die zwischen 800 und 1000 m²/g liegt, wobei das adsorbierende Granulatmaterial thermisch regenerierbar ist;
wobei die Wasser beim Austritt aus dem Behälter über ein Sieb, das im oberen Teil des Behälters installiert ist, gefiltert werden, bevor sie der Klärung unterzogen werden, um das adsorbierende Granulatmaterial in dem Behälter zurückzuhalten, bei gleichzeitiger Nichtzurückhaltung des nicht adsorbierten organischen Materials auf dem adsorbierenden Material,
und dadurch, dass
der Inhalt des Kontaktbehälters nur teilweise derart gerührt wird, dass ein Konzentrationsgradient des adsorbierenden Materials innerhalb desselben entsteht, wobei der Boden des Kontaktbehälters eine nicht gerührte Zone darstellt;
wobei benutztes adsorbierendes Granulatmaterial kontinuierlich oder intermittierend aus der nicht gerührten Zone des Kontaktbehälters entfernt wird, um umgehend thermisch regeneriert zu werden, und durch neues adsorbierendes Granulatmaterial ersetzt wird.

2. Verfahren nach Anspruch 1, **dadurch gekennzeichnet, dass** die Kontaktzeit des adsorbierenden Materials mit den Wassern in dem Kontaktbehälter zwischen 5 min und 20 min liegt.

3. Verfahren nach Anspruch 1 oder 2, **dadurch gekennzeichnet, dass** das benutzte adsorbierende Granulatmaterial entfernt und durch neues adsorbierendes Granulatmaterial derart ersetzt wird, dass eine mittlere Konzentration des adsorbierenden Materials in dem Kontaktbehälter aufrechterhalten wird.

4. Verfahren nach einem der Ansprüche 1 bis 3, **dadurch gekennzeichnet, dass** es einen vorherigen Schritt umfasst, der darin besteht, die zu behandelnden Wasser vor ihrem Eintritt in den Reaktor über einen Vorfilter vorzufiltern, der eine Trenngrenze aufweist, die zwischen 1 und 5 mm liegt.

5. Verfahren nach einem der Ansprüche 1 bis 4, **dadurch gekennzeichnet, dass** es periodische Reinigungsschritte des Siebes durch ein Reinigungsverfahren umfasst, das aus der Gruppe ausgewählt ist, die aus einem Rückwaschverfahren und einem Reinigungsverfahren durch Einblasen von Luft besteht.

6. Verfahren nach einem der Ansprüche 1 bis 5, **dadurch gekennzeichnet, dass** der Klärschritt einen Koagulationsschritt des zu behandelnden Wassers umfasst, der koagulierte Wasser produziert, einen Flockungsschritt des koagulierten Wassers, der geflockte Wasser produziert, einen Abscheidungsschritt des geflockten Wassers, der geklärte Wasser und Schlämme produziert; wobei die Schritte des Koagulierens, Flockens und Abscheidens bei Abwesenheit von adsorbierendem Granulatmaterial durchgeführt werden.

7. Verfahren nach Anspruch 6, **dadurch gekennzeichnet, dass** der Klärschritt einen Einleitungsschritt eines Ballasts, einen Verarbeitungsschritt der Schlämme, um ihnen das Wesentliche des Ballasts zu entziehen, den sie enthalten, und einen Schritt, der darin besteht, diesen in dem Klärschritt zu recyceln, umfasst, wobei die Schlämme kein adsorbierendes Granulatmaterial enthalten.

8. Anlage für die Durchführung des Verfahrens nach einem der Ansprüche 1 bis 7, **dadurch gekennzeichnet, dass** sie umfasst:
einen Kontaktbehälter (21), der mit Wasserzufuhrmitteln (1), Ableitungsmitteln der Wasser durch Überlauf, Rührmitteln (22) und adsorbierendem Granulatmaterial versehen ist, wobei der Kontaktbehälter (21) ein Gemisch aus zu behandelnden Wassern und adsorbierendem Granulatmaterial empfängt;
Klärmittel, die mit den Ableitungsmitteln durch Überlauf verbunden sind;
**dadurch gekennzeichnet, dass** das adsorbierende Material aus Aktivkohlepartikelagglomeraten besteht, wobei die Agglomerate eine durchschnittliche Größe aufweisen, die zwischen 200 µm und 600 µm liegt, und eine spezifische Oberfläche, die zwischen 800 und 1000 m²/g liegt;
dadurch, dass sie ein Sieb (9) einschließt, das im oberen Teil des Behälters installiert ist, wobei das Sieb eine poröse Materialschicht umfasst, die eine Stärke aufweist, die zwischen 1 und 5 mm liegt, wobei das Material eine Trenngrenze aufweist, die zwischen 100 µm und 200 µm liegt;
dadurch, dass der Kontaktbehälter (21) einen unteren Teil (21a) in Trichterform aufweist, wobei das Ende des Trichters mit Ableitungsmitteln (21b) versehen ist;
dadurch, dass die Rührmittel (22) des Kontaktbehälters (21) derart ausgebildet sind, dass sie den Inhalt des oberen Teils des Kontaktbehälters (21) rühren können, ohne den Inhalt von dessen trichterförmigem unterem Teil (21a) zu rühren.

9. Anlage nach Anspruch 8, **dadurch gekennzeichnet, dass** das poröse Material ein PEHD ist.

10. Anlage nach Anspruch 8 oder 9, **dadurch gekennzeichnet, dass** die das Sieb (9) bildende poröse Materialschicht in einer rohr- oder kastenförmigen Struktur organisiert ist, wobei die Filtration von außerhalb nach innerhalb des Rohrs oder des Kastens erfolgt, wobei die Ableitungsmittel des Behälters mit dem Inneren des Rohrs oder des Kastens verbunden sind.

11. Anlage nach einem der Ansprüche 8 bis 10, **dadurch gekennzeichnet, dass** die Rührmittel (22) des Kontaktbehälters (21) einen Rotor mit Schaufeln, der vertikal beweglich in diesem angebracht ist, Mittel (22a), die erlauben, die Rotationsgeschwindigkeit des Rotors zu verändern, und Mittel (22b), die erlauben, die vertikale Position des Rotors in dem Behälter zu verändern, einschließen.

12. Anlage nach einem der Ansprüche 8 bis 11, **dadurch gekennzeichnet, dass** sie einen Filter (13) umfasst, um die zu behandelnden Wasser zu filtern, der oberstromig zu dem Kontaktbehälter (21) vorgesehen ist und eine Trenngrenze aufweist, die zwischen 1 mm und 5 mm liegt.

13. Anlage nach einem der Ansprüche 8 bis 12, **dadurch gekennzeichnet, dass** die Anlage Koagulans-Einleitungsmittel (33) in eine Koagulationszone (3) und Flockungsmittel-Einleitungsmittel (43) in eine Flockungszone (4) umfasst.

14. Anlage nach Anspruch 13, **dadurch gekennzeichnet, dass** sie Ballast-Einleitungsmittel (45) in die Flockungszone (4) umfasst.

15. Anlage nach Anspruch 14 **dadurch gekennzeichnet, dass** sie Extraktionsmittel (7) von Schlämmen einschließt, die von den Klärmitteln kommen, die mit Verarbeitungsmitteln der Schlämme verbunden sind, die erlauben, daraus das Wesentliche des Ballasts zu extrahieren, den sie enthalten, und Mittel zum Verteilen des extrahierten Ballasts in der Flockungszone (4).

## Claims

1. Method for treating water with a view to reducing its content in organic matter and pollutants, said method comprising:
a step for putting water to be treated into contact with a granular adsorbent material in a contact vessel provided with stirring means;
followed by a step for clarifying water coming from said vessel leading to the obtaining of clarified water and sludge;
**characterized in that**
said granular adsorbent material is constituted by agglomerates of active carbon particles, said agglomerates having an average size of 200 µm to 600 µm and a specific surface area of 800 to 1000 m²/g, said granular adsorbent material regenerable by thermal means;
said water being filtered when exiting said vessel on a screen provided in the upper part of said vessel, before undergoing clarification, in order to retain said adsorbent granular material within said vessel while at the same time not retaining the non-adsorbed organic material on said adsorbent material,
and **in that**
the content of said contact vessel is stirred only partially so as to create a gradient of concentration of said adsorbent material within it, the bottom of said contact vessel constituting a non-stirred area;
used adsorbent granular material being drained continuously or intermittently from said non-stirred area of said contact vessel in order to be regenerated extemporaneously by thermal means, and replaced by fresh adsorbent granular material.

2. Method according to claim 1, **characterized in that** the contact time of the adsorbent material with the water in said contact vessel is from 5 minutes to 20 minutes.

3. Method according to claim 1 or 2 **characterized in that** the used adsorbent granular material is drained and replaced by fresh adsorbent granular material so as to maintain an average concentration of said adsorbent material in said contact tank.

4. Method according to any one of the claims 1 to 3 **characterized in that** it comprises a preliminary step for pre-filtering the water to be treated before it enters said reactor on a pre-filter having a cut-off threshold of 1 to 5 mm.

5. Method according to any one of the claims 1 to 4 **characterized in that** it comprises periodic steps for cleaning said screen by a cleansing method chosen from the group constituted by a backwashing method and an air-blowing method.

6. Method according to any one of the claims 1 to 5 **characterized in that** said step of clarification comprises a step of coagulation of said water to be treated producing coagulated water, a step of flocculation of said coagulated water producing flocculated water, a step of settling of said flocculated water producing clarified water and sludge, said steps of coagulation, flocculation and settling being carried out in the absence of adsorbent granular material.

7. Method according to claim 6 **characterized in that** said step of clarification comprises a step for injecting a ballast, a step for treating said sludges in order to extract therefrom the essential part of the ballast that it contains and a step for recycling this ballast in said clarification step, said sludges containing no adsorbent granular material.

8. Plant for the implementation of the method according to any one of the claims 1 to 7, **characterized in that** it comprises:
a contact vessel (21) provided with means for conveying water (1), means for discharging water by overflow ,stirring means (22) and adsorbent granular material, said contact vessel (21) receiving a mixture of water to be treated and adsorbent granular material;
clarifying means connected to said means for discharging by overflow;
**characterized in that** said adsorbent material is constituted by agglomerates of active carbon particles, said agglomerates having a mean size of 200 µm to 600 µm and a specific surface area of 800 to 1000 m²/g;
**in that** it includes a screen (9) installed in the upper part of said vessel, said screen comprising a layer of porous material having a thickness of 1 to 5 mm, said material having a cut-off threshold of 100 µm to 200 µm;
and **in that** said contact vessel (21) has a lower part (21a) in the shape of a hopper, the extremity of said hopper being provided with a draining means (21b);
and **in that** said stirring means (21) of said contact vessel (21) are designed so that they are able to stir the content of the upper part of said contact vessel (21) without stirring the content of the lower hopper-shaped part (21a).

9. Installation according to claim 8 **characterized in that** said porous material is an HDPE.

10. Plant according to claim 8 or 9 **characterized in that** the layer of porous material forming said screen (9) is organized as a tube-shaped or box-shaped structure, the filtering taking place from the exterior to the interior of the tube or the box, said means of discharging from said tank being connected to the interior of the tube or the box.

11. Plant according to one of the claims 8 to 10 **characterized in that** said stirring means (22) of said contact vessel (21) include a blade rotor mounted so as to be vertically mobile in said vessel, means (22a) to make the speed of rotation of said rotor vary and means (22b) enabling the vertical position of the rotor in said vessel to be made to vary.

12. Plant according to one of the claims 8 to 11 **characterized in that** it comprises a filter (13) to filter the water to be treated, to be placed upstream to said contact vessel (21) and having a cut-off threshold of 1 mm to 5 mm.

13. Plant according to any one of the claims 8 to 12 **characterized in that** said plant comprises means for injecting coagulant (33) into a coagulation zone (3) and means for injecting flocculent (43) into a flocculation area (4).

14. Plant according to claim 13, **characterized in that** it comprises means for injecting ballast (45) into said flocculation area (4).

15. Plant according to claim 14 **characterized in that** it includes means (7) for extracting sludge coming from said clarification means connected to means for treating said sludge enabling the extraction therefrom of the essential part of the ballast that it contains and means for distributing extracted ballast in said flocculation area (4).
